# EUROPEAN PATENT APPLICATION

(11) **EP 3 584 125 A1**
(43) Date of publication of application: **25.12.2019**
(21) Application number: 19180256.0
(22) Date of filing: 14.06.2019
(51) Int. Cl.: B60S 1/38

(54) **WINDSCREEN WIPER AND VEHICLE EQUIPPED WITH SUCH WINDSCREEN WIPER**

(30) Priority: 19.06.2018 BE 201805419
(71) Applicant: Euro Invest & Partners, besloten vennotschap met beperkte aansprakelijkheid, 9400 Ninove (Nederhasselt) (BE)
(72) Inventor: TIMMERMANS, Erik, 9400 Ninove (Nederhasselt) (BE)
(74) Representative: Donné, Eddy

(57) **Abstract**

Windscreen wiper, which is intended to be attached to a window (2) of a vehicle (1), comprising a wiper arm (4) with a hingeably attached wiper (7), characterised in that the wiper (7) is provided with a sponge (8).

## Description

The present invention relates to a windscreen wiper.

In particular, the invention is intended to be applied to wipe windows, such as the windscreen and/or the rear window of vehicles such as cars, lorries, etc.

It is known that a windscreen wiper is used to wipe off water, which falls on windows of a vehicle, for example as a result of rain.

This is necessary to guarantee the good visibility through these windows when it is raining for example.

Traditionally, to this end the windscreen wiper comprises a motor-driven wiper arm with a hingeably mounted wiper with a wiper blade that can move back and forth over the window.

Typically, the wiper is mounted in the middle of the wiper arm.

The wiper blade typically comprises a rubber strip that will rub against the window during the movement to thus wipe off the water.

It is known that when driving, dirt, insects, etc. often hit the windscreen.

These often smudge the window, which reduces visibility. For safety and driving comfort, it is very important that these smudges are removed.

With a windscreen wiper it is not possible to remove such smudges. On the contrary, the use of windscreen wipers in this case will ensure that the dirt or dead insects are spread over the windscreen because the wiper blade will smear out the dirt.

That is why vehicles are often equipped with so-called windscreen washers, with which the windows can be sprayed with a cleaning fluid, often water with a suitable cleaning product and possibly an antifreeze.

The cleaning fluid will ensure that the dirt comes off the windows easier.

Although this will allow some smudges to be removed, in practice it appears that even with the use of cleaning fluid the windscreen wipers are not able to remove the dead insects efficiently.

This is why it will be necessary to regularly clean the window.

This why sponges and buckets of cleaning product are often provided at petrol stations to clean the dirty windows during a stop at the petrol station.

A disadvantage of this is of course that the trip has to be interrupted regularly to clean the windows.

The purpose of the present invention is to provide a solution to at least one of the aforementioned and other disadvantages.

The object of the present invention is a windscreen wiper, which is intended to be attached to a window of a vehicle, comprising a wiper arm with a hingeably attached wiper, characterised in that the wiper is provided with a sponge.

This provides the advantage that using such a wiper with a sponge, the dead insects can easily be removed from the window.

The sponge will be able to absorb the smudges of dead insects and the like, instead of smearing them out like a wiper blade.

Such windscreen wiper can be used while driving the vehicle, such that you don't have to stop to clean the window.

In a first practical embodiment, the wiper is further provided with a wiper blade.

In a second practical embodiment, the windscreen wiper is provided with an additional wiper arm, which is provided with a wiper with a wiper blade.

Such two aforementioned practical embodiments combine a traditional windscreen wiper with a windscreen wiper with a sponge, such that the windscreen wiper is suitable to remove both water, i.e. rain, from the window, and dead insects.

In the first embodiment the wiper blade is preferably located above the sponge in a mounted condition of the windscreen wiper. This means that in the final movement of the windscreen wiper before it stops, which is always a downward movement, the wiper blade will move over the window last so that a dry, clean window remains.

In the second embodiment, the additional wiper arm is preferably provided with a separate individual drive. This will allow both wiper arms to be controlled separately.

In an alternative embodiment, the wiper is detachably mounted on the wiper arm.

For example, the wiper can be attached to the wiper arm using a click system.

In the aforementioned first embodiment this could be applied, whereby the wiper with sponge can be clicked on standard windscreen wipers. In this way a windscreen wiper according to the invention is obtained.

In a preferred embodiment the wiper arm is provided with a spring or the like that can be used to control the compressive force of the wiper on the windscreen.

Consequently, the force or pressure exercised by the sponge on the window can be controlled and raised when compared to a traditional wiper with a wiper blade.

This has the advantage that more friction is created between the sponge and the window such that the dirt will be removed from the window better.

The invention also relates to a vehicle that is equipped with at least one windscreen wiper according to the invention.

For example, the windscreen wiper can take the form of the aforementioned first practical embodiment or of the aforementioned second practical embodiment, which in principle corresponds with a combination of a traditional windscreen wiper and a windscreen wiper according to the invention in its simplest form.

It goes without saying that the advantages of a windscreen wiper according to the invention also apply for a vehicle according to the invention.

With the intention of better showing the characteristics of the invention, a few preferred embodiments of a windscreen wiper according to the invention and a vehicle equipped with it are described by way of an example without any limiting nature, with reference to the accompanying drawings, wherein:
figure 1 schematically shows a perspective view of a vehicle according to the invention;
figure 2 shows the windscreen wiper of figure 1 in more detail;
figure 3 shows a view according to the arrow F3 in figure 2;
figure 4 shows a variant of figure 1,
figure 5 shows the windscreen wiper of figure 4 in more detail,
figures 6 and 7 show alternative embodiments.

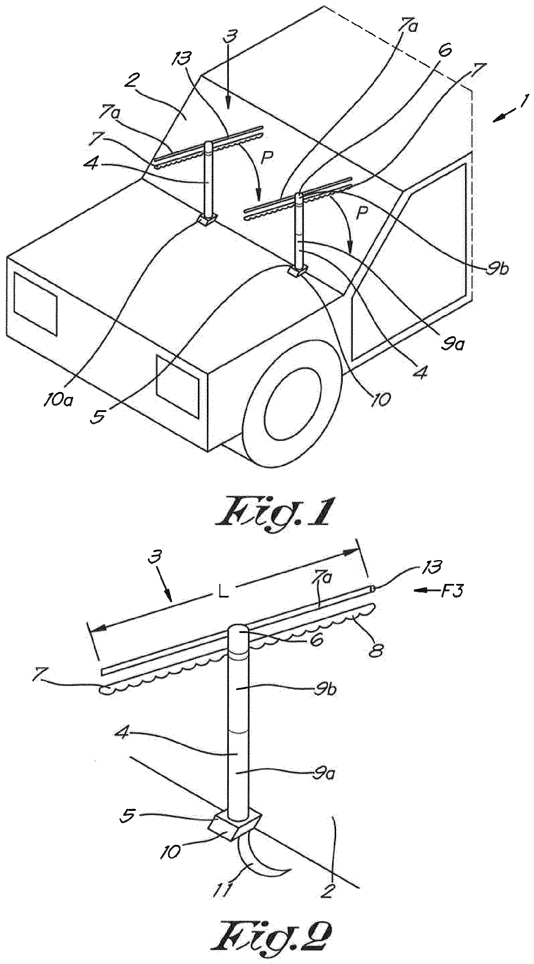

The vehicle shown in figure 1 is, in this case, but not necessarily, a car 1.

The windscreen 2 of the car 1 is provided with two windscreen wipers 3 according to the invention in this case.

Each windscreen wiper 3 comprises a wiper arm 4 which is attached with one end 5 to the car 1.

At the other end 6, a wiper 7 is hingeably mounted.

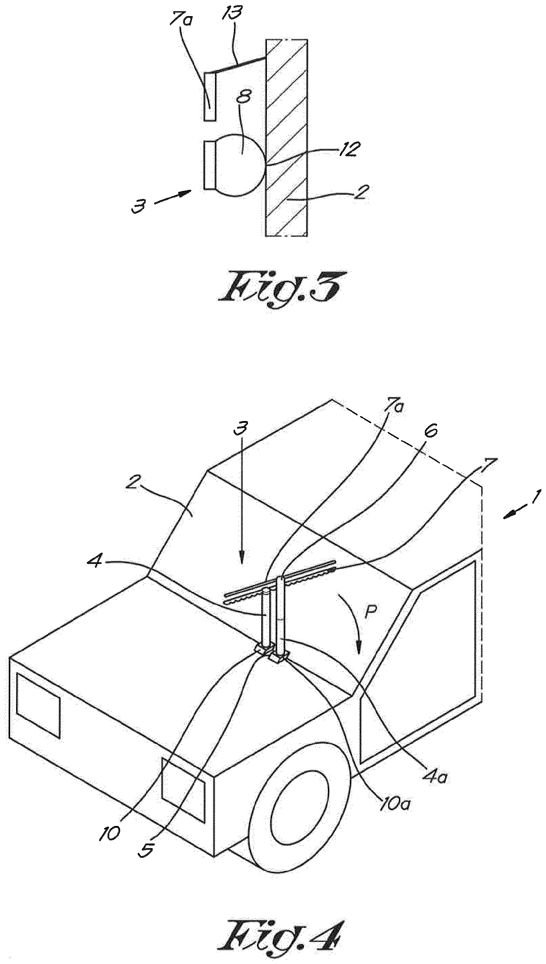

The wiper 7 is provided with a sponge 8, as shown in figures 2 and 3.

The sponge 8 of the wiper 7 will make contact with the window 2, as shown in figure 3.

In this case, the sponge 8 extends over the entire length L of the wiper 7.

In this case, but not necessarily for the invention, the wiper 7 with sponge 8 is detachably mounted on the wiper arm 4.

Preferably, the sponge 8 is made of an abrasive material, this means: a material with a certain roughness such that it will cause the necessary friction when it is moved back and forth against a window 2. A possible example is an insect sponge.

In this case, both wiper arms 4 are provided with an additional wiper 7a which is provided with a wiper blade 13.

It is hereby such that the wiper blade 13 is located above the sponge 8 in a mounted condition of the windscreen wiper 3, as shown in figure 3.

In this case, one of the wiper arms 4 is telescopic. In the example shown this is realised because it consists of two telescopic parts 9a, 9b that slide into each other.

An advantage of this is that this windscreen wiper 3, when the wiper arm 4 is retracted, can be taken out of operation as it were at moments when this is not necessary, whereby the windscreen wiper 3 will be very compact.

Furthermore, in this case each windscreen wiper 3 is provided with a drive 10 in the form of a drive motor or the like with which the windscreen wipers 3 are attached to the vehicle 1.

The separate individual drives 10 for each windscreen wiper 3 will allow both wiper arms 4 to be operated independently from each other.

It goes without saying that both the drive 10 and the way in which the windscreen wiper 3 is attached to the car 1, can be realised in many different ways.

Furthermore, the wiper arms 4 are provided with a spring 11 or the like which can be used to adjust the compressive force of the wiper 7 on the window 2.

This spring 11 is schematically shown in figure 2.

It is possible hereby that the compressive force can be set once during the installation of the wiper 3, but also that the compressive force can be adjusted afterwards according to the needs or wishes of the driver/user.

By increasing the compressive force, the contact area 12 between the sponge 8 and the window 2, as shown in figure 3, will be increased as the sponge 8 will be slightly compressed against the window 2.

As shown in figure 1, the placement of both wiper arms 4 is such that the wipers 7, 7a can move back and forth parallel to each other over the window 2 when they are both driven by their respective drive motor 10.

This is not necessarily the case: both wipers 7, 7a can for example also be moved back and forth over the window 2 in turn.

The operation of the windscreen wiper 1 is very simple and as follows.

During operation, the wiper arms 4 will be driven by the drives 10 and thus moved parallel and synchronously over the window 2.

The wiper 7 with the sponge 8 shall hereby remove the dead insects and other dirt from the window 2, while the wiper 7a with wiper blade 13 will remove the water from the window 2.

The sponge 8 will be able to absorb any dirt residues, so that they cannot be smeared out by the wiper blade 13.

By correctly choosing the position and orientation of both wipers 7, 7a, as shown in figure 2, it can be ensured that in the last downward movement of both wiper arms 4, the wiper blade 13 is the last to move over the window 2. This is shown with the arrow P in figure 1.

If one does not want to use the windscreen wiper 3 with telescopic wiper arm 4, the wiper arm 4 in question can be retracted by sliding the aforementioned parts 9a, 9b into each other.

Consequently, this wiper arm 4 with wiper 7 and 7a will become very compact and only take up minimal space at the bottom of the window 2.

The other windscreen wiper 3 can then still be used, in part thanks to the separate drive 10a.

Figure 4 shows a variant of figure 1, whereby in this case there is only one windscreen wiper 3.

This comprises, just as in figure 1, a wiper arm 4 with a wiper 7 with sponge 8 and is provided with a drive 10.

However, in this case the windscreen wiper 3 is further provided with an additional wiper arm 4a, which is provided with a wiper 7a with a wiper blade 13.

The additional wiper arm 4a is provided with a separate individual drive 10a.

Both wiper arms 4, 4a are placed right next to each other on the window 2 of the vehicle 1 and will be able to move synchronously in this way, whereby both wiper arms 4, 4a remain parallel to each other.

In this case too the position of the wiper arms 4, 4a is chosen such that in the last, downward movement of both wiper arms 4, 4a, the wiper blade 13 is the last to move over the window 2.

In this case it is not excluded that the wiper arm 4 is provided with a spring 11, just like in the example of figure 2.

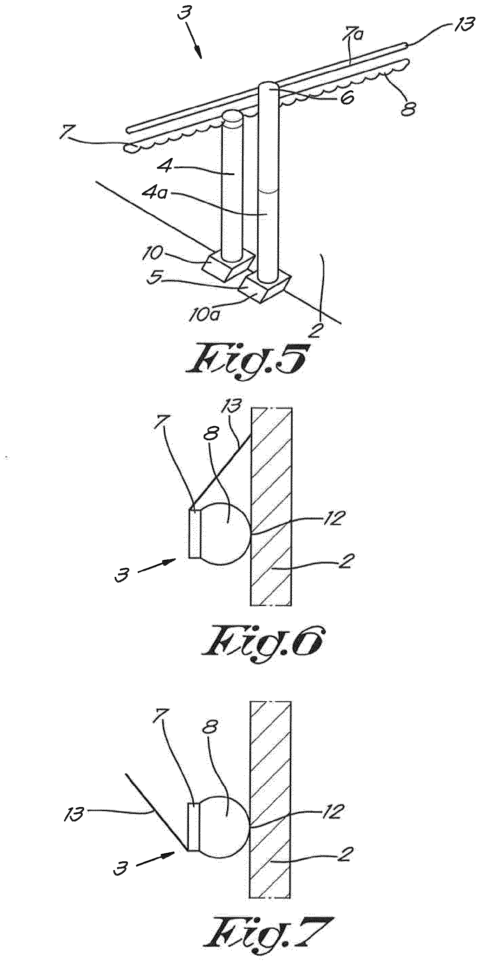

Figures 6 and 7 show two variants according to figure 3, whereby in this case the wiper 7 is provided with a wiper blade 13.

This means that the wiper 7 has both a sponge 8 and a wiper blade 13. In other words, there is no additional wiper 7a.

Both are facing the same side in figure 6, this means they can both make contact with the window 2 in a mounted condition of the windscreen wiper 3.

Preferably, the wiper blade 13 is located above the sponge 8 in a mounted condition of the windscreen wiper 3.

This will ensure that in the downward movements of the windscreen wiper 3, which will be the last movement before the wiper 3 is turned off, the wiper blade 13 will be the last to go over the windscreen 2, such that the windscreen 2 will be clean and dry.

In figure 7 the sponge 8 and the wiper blade 13 both face another side, this means that either the sponge 8 or the wiper blade 13 can make contact with the window 2 in a mounted condition of the windscreen wiper 3.

The wiper 7 can hereby rotate around its axis to choose whether the wiper blade 13 or the sponge 8 make contact with the window 2.

For the person skilled in the art it is known how this rotating can be realised.

During the operation of the windscreen wiper 3 in figure 7, the driver/user will be able to choose whether the sponge 8 or the wiper blade 13 are used, i.e. comes into contact with the window 2.

In all aforementioned embodiments it is possible that a supply of cleaning fluid to the sponge 8 is provided.

This is more advantageous than spraying cleaning fluid onto the windows 2, as the sponge 8 is wet immediately thus, instead of the sponge 8 first having to get to the wet places on the window 2.

By making the sponge 8 wet with cleaning fluid, the dirt and the dead insects can be removed better.

By providing the supply just before the wiper 3 is put into operation, the sponge 8 will be wet at the moment it is moved over the window 2, so that the better operation can be ensured immediately.

The present invention is by no means limited to the embodiments described as an example and shown in the drawings, but a windscreen wiper according to the invention and a vehicle equipped with this can be realised in all kinds of forms and dimensions, without departing from the scope of the invention.

## Claims

1. Windscreen wiper, which is intended to be attached to a window (2) of a vehicle (1), comprising a wiper arm (4) with a hingeably attached wiper (7), **characterised in that** the wiper (7) is provided with a sponge (8).

2. Windscreen wiper according to claim 1, **characterised in that** the sponge (8) extends over the entire length (L) of the wiper (7).

3. Windscreen wiper according to claim 1 or 2, **characterised in that** the windscreen wiper (3) is provided with a drive (10) in the form of a drive motor or the like with which the windscreen wiper (3) can be attached to the vehicle.

4. Windscreen wiper according to any one of the previous claims, **characterised in that** the wiper (7) is detachably mounted on the wiper arm (4).

5. Windscreen wiper according to any one of the previous claims, **characterised in that** the windscreen wiper (3) is provided with an additional wiper (7a) which is provided with a wiper blade (13).

6. Windscreen wiper according to any one of the previous claims 1 to 4, **characterised in that** the wiper (7) is further provided with a wiper blade (13).

7. Windscreen wiper according to claim 5 or 6, **characterised in that** the wiper blade (13) is located above the sponge (8) in a mounted condition of the windscreen wiper (3).

8. Windscreen wiper according to claim 6, **characterised in that** the wiper (7) can rotate around its axis, such that in a mounted condition of the windscreen wiper (3) either the wiper blade (13) or the sponge (8) can make contact with the window (2).

9. Windscreen wiper according to any one of the previous claims 1 to 3, **characterised in that** the windscreen wiper (3) is provided with an additional wiper arm (4a), which is provided with a wiper (7a) with a wiper blade (13).

10. Windscreen wiper according to claim 9, **characterised in that** the additional wiper arm (4a) is provided with a separate individual drive (10a).

11. Windscreen wiper according to any one of the previous claims, **characterised in that** the wiper arm (7) is provided with a spring (11) or the like with which the compressive force of the wiper (7) on the window (2) can be controlled.

12. Windscreen wiper according to any one of the previous claims, **characterised in that** the wiper arm (4) is telescopic.

13. Windscreen wiper according to any one of the previous claims, **characterised in that** the sponge (8) is made of an abrasive material, such as for example an insect sponge.

14. Windscreen wiper according to any one of the previous claims, **characterised in that** a supply for cleaning fluid to the sponge (8) is provided.

15. Vehicle, **characterised in that** the vehicle (1) is equipped with at least one windscreen wiper (3) according to any one of the previous claims.
